# EUROPEAN PATENT APPLICATION

(11) **EP 1 746 830 A2**
(43) Date of publication of application: **24.01.2007**
(21) Application number: 06015113.1
(22) Date of filing: 20.07.2006
(51) Int. Cl.: H04N 7/14

(54) **Method for performing presentation in video telephone mode and wireless terminal implementing the same**

(30) Priority: 22.07.2005 KR 20050066879
(71) Applicant: Samsung Electronics Co., Ltd., Suwon-si, Gyeonggi-Do (KR)
(72) Inventor: Kim, Hwan, Yeongtong-gu, Suwon-si, Gyeonggi-do (KR); Kim, Jeong-Hoon, Yeongtong-gu, Suwon-si, Gyeonggi-do (KR); Lim, Chae-Whan, Yeongtong-gu, Suwon-si, Gyeonggi-do (KR)
(74) Representative: Lang, Johannes

(57) **Abstract**

Disclosed is a method and wireless terminal for performing a presentation in a video telephone mode, wherein a presentation file is selected in the video telephone mode, and screen data in corresponding sequence of the selected presentation file is displayed and transmitted. Disclosed is another method and wireless terminal for performing a presentation in a video telephone mode of a wireless terminal, wherein when a first and a second wireless terminal are in the video telephone mode, an equal presentation file is selected and displayed by the first and the second wireless terminals, when the first wireless terminal selects screen data in corresponding sequence of the presentation file, the screen data in corresponding sequence is displayed and signal frames to the second wireless terminal are transmitted, and when the signal frames are received from the first wireless terminal, the second wireless terminal screen data in corresponding sequence of the presentation file is displayed.

## Description

### BACKGROUND OF THE INVENTION

### Field of the Invention

The present invention relates to a method for performing a presentation in a video telephone mode of a wireless terminal. More particularly, the present invention relates to a method for performing a presentation in a video telephone mode of a wireless terminal, in which communication can be performed while a presentation file is displayed and transmitted in the video telephone mode.

### Description of the Related Art

Nowadays, a wireless terminal is being developed into a terminal capable of performing high speed data communication in addition to voice communication. That is, if a mobile communication network of an IMT 2000 standard is constructed, it is possible to perform high speed data communication by means of a wireless terminal in addition to voice communication. Data processed by a wireless terminal capable of performing data communication may include packet data and image data. Further, a camera or a TV receiver has been installed in a wireless terminal in order to perform a function capable of displaying moving picture signals. Accordingly, a wireless terminal equipped with the camera as described above may photograph images and display moving pictures and still pictures, and may also transmit photographed images. Further, a wireless terminal equipped with a TV receiver may display received image signals.

A wireless terminal including a video telephone function performs video transmission and reception together with audio transmission and reception. Further, the wireless terminal can perform communication while transmitting user video data, and receiving video data of a communication partner and displaying the received video data.

If a presentation function can be performed in the video communication mode of the wireless terminal including the video telephone function, it becomes possible to provide more convenient functions.

Accordingly, there is a need for an improved method and wireless terminal for performing a presentation in a video telephone mode.

### SUMMARY OF THE INVENTION

The present invention has been made to solve the above-mentioned problems occurring in the prior art. As such, an object of the present invention is to provide a method and wireless terminal for performing a presentation in a video telephone mode of a wireless terminal, in which communication can be performed while a presentation file is displayed and transmitted in the video telephone mode of the wireless terminal.

In accordance with one exemplary aspect of the present invention, there is provided a method and wireless terminal for performing a presentation in a video telephone mode of a wireless terminal where a presentation file is selected while the terminal is in a video telephone mode and screen data is displayed and transmitted in corresponding sequence of the selected presentation file.

In accordance with another exemplary aspect of the present invention, there is provided a method and wireless device for performing a presentation while the terminal is in a video telephone mode in which, when a presentation is selected while the terminal is in video telephone mode, a presentation mode is switched to, a type of presentation file in the presentation mode is displayed, and when a schedule presentation file is selected, (n) screen data of the selected presentation file is sequentially displayed and transmitted.

In accordance with another exemplary aspect of the present invention, there is provided a method and wireless terminal for performing a presentation in a video telephone mode in which, when a first wireless terminal and a second wireless terminal are in video telephone mode, the same presentation file is selected and displayed by the first wireless terminal and the second wireless terminal, when the first wireless terminal selects screen data in corresponding sequence of the presentation file, the first wireless terminal displays the screen data in corresponding sequence and transmits signal frames reporting the screen data in corresponding sequence to the second wireless terminal, and when the signal frames are received from the first wireless terminal, the second wireless terminal displays screen data in corresponding sequence of the presentation file, which are the same as the screen data selected by the first wireless terminal.

In accordance with still another exemplary aspect of the present invention, there is provided a method and wireless terminal for performing a presentation in a video telephone mode in which, when a first wireless terminal and a second wireless terminal are in the video telephone mode, the same presentation file is selected and displayed by the first wireless terminal and the second wireless terminal, whenever the first wireless terminal sequentially selects (n) screen data of the presentation file, the first wireless terminal sequentially displays the (n) screen data in corresponding sequence and sequentially transmits signal frames, which report screen data in corresponding sequence from among the (n) screen data, to the second wireless terminal, and when the signal frames are received from the first wireless terminal, the second wireless terminal displays (n) screen data of the presentation file in a sequence equal to a sequence in which the (n) screen data of the presentation file in the first wireless terminal are displayed.

Other objects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram illustrating the construction of a wireless terminal according to an exemplary embodiment of the present invention;
FIG. 2 is a flow diagram illustrating a process for performing a presentation in a video telephone mode of a wireless terminal according to an exemplary embodiment of the present invention;
FIG. 3 is a flow diagram illustrating a process for performing a presentation in a video telephone mode of a wireless terminal according to an exemplary embodiment of the present invention; and
FIG. 4 is a diagram illustrating the exemplary embodiments of FIGs. 2 and 3.

### DETAILED DESCRIPTION OF EXEMPLARY EMBODIMENTS

The matters defined in the description such as a detailed construction and elements are provided to assist in a comprehensive understanding of the embodiments of the invention and are merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness. Exemplary embodiments of the present invention will be described in detail herein below with reference to the accompanying drawings. The same reference numerals are used to designate the same elements as those shown in other drawings.

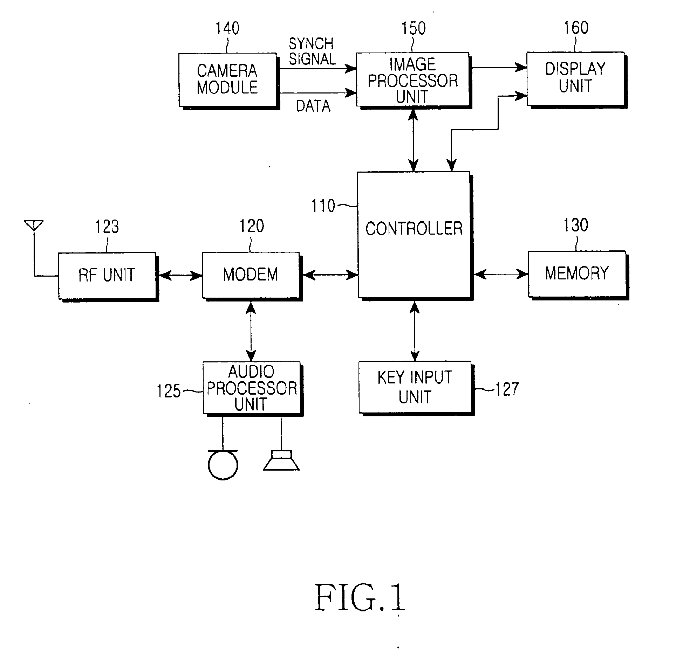

FIG. 1 is a block diagram illustrating the construction of a wireless terminal according to an exemplary embodiment of the present invention.

Referring to FIG. 1, a Radio Frequency (RF) unit 123 performs a wireless communication function communication of the wireless terminal. The RF unit 123 includes an RF transmitter for up-converting and amplifying the frequency of transmitted signals, an RF receiver for low-noise amplifying received signals and down-converting the frequency of the received signals, and the like. A modem 120 includes a transmitter for coding and modulating the transmitted signals, a receiver for demodulating and decoding the received signals, and the like. An audio processor 125 may include a codec. The codec includes a data codec for processing packet data, and the like, and an audio codec for processing audio signals such as voice. The audio processor 125 converts digital audio signals received through the modem 120 into analog signals through the audio codec for reproduction, or converts analog audio signals generated from a microphone into digital audio signals through the audio codec and transmits the digital audio signals to the modem 120. The codec may be separately provided or included in a controller 110.

A memory 130 may include a program memory and a data memory. The program memory may store programs for controlling general operations of the wireless terminal, and programs for controlling display and transmission of a presentation file in a video telephone mode according to the exemplary embodiment of the present invention. The data memory temporarily stores data generated during the execution of the programs. Further, the memory 130 can store the presentation file according to the exemplary embodiment of the present invention.

The controller 110 controls the general operations of the wireless terminal, which may also include the modem 120 and the codec. According to an exemplary embodiment of the present invention, the controller 110 controls the presentation file to be displayed and transmitted in the video telephone mode. The presentation file includes at least one screen data.

According to an exemplary embodiment of the present invention, there is a state in which a presentation file, the same as that of a communication partner terminal in video telephone mode, is selected and displayed by a user. While in that state, if sequential screen data of the presentation file are selected by the user, the controller 110 controls transmission of signal frames reporting the sequential screen data to the communication partner terminal.

Further, according to an exemplary embodiment of the present invention, there is a state in which a presentation file, the same as that of a communication partner terminal in the video telephone mode, is selected and displayed by a user. While in that state, if signal frames that report screen data in corresponding sequence are received from the communication partner terminal, the controller 110 controls the screen data in the corresponding sequence, which are included in the signal frames, to be displayed from the presentation file.

A camera module 140 includes a camera sensor for photographing image data and converting photographed optical signals into electric signals, and a signal processor for converting analog image signals photographed by the camera sensor into digital data. The camera sensor may be a Charge-Coupled Device (CCD) sensor. The signal processor may be realized by a Digital Signal Processor (DSP). Further, the camera sensor may be integrated with the signal processor, or may also be constructed separately from the signal processor.

An image processor 150 generates screen data for displaying image signals output from the camera module 140. The image processor 150 processes the image signals, which are output from the camera module 140, by the frame, and outputs the frame image data according to the characteristics and sizes of a display unit 160. The image processor 150 includes an image codec, compresses the frame image data, which is displayed on the display unit 160, by a predetermined scheme, or restores the compressed frame image data into the original frame image data. The image codec may include a JPEG codec, an MPEG4 codec, a wavelet codec, and the like It is assumed that the image processor 150 has an On Screen Display (OSD) function, which may output on screen display data according to displayed screen sizes under the control of the controller 110.

The display unit 160 displays the image signals output from the image processor 150 on a screen, and displays user data output from the controller 110. The display unit 160 may use a Liquid Crystal Display (LCD). In this case, the display unit 160 may include an LCD controller, a memory capable of storing image data, an LCD display device, and the like. When the LCD has a touch screen function, the display unit 160 may also operate as an input unit. The display unit 160 displays the screen data of the presentation file in the video telephone mode according to the exemplary embodiment of the present invention.

A keypad 127 includes keys for inputting number and character information and function keys for setting various functions. The keypad 127 may include a key for selecting the screen data of the presentation file in the video telephone mode according to the exemplary embodiment of the present invention.

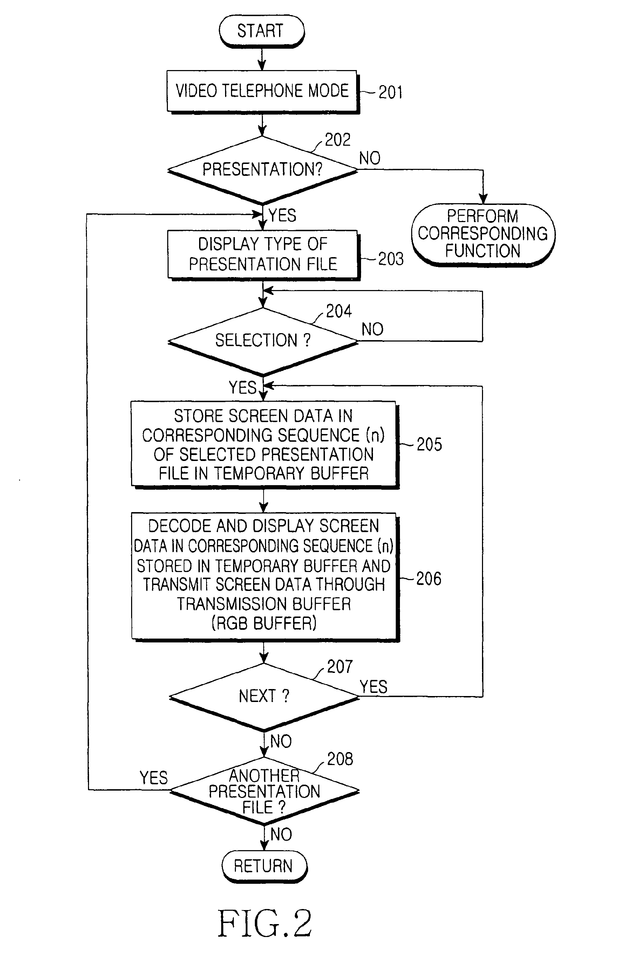

Hereinafter, an operation for performing a presentation in the video telephone mode of the wireless terminal as described above will be described in detail with reference to FIGs. 2 to 4.

FIG. 2 is a flow diagram illustrating a process for performing a presentation in the video telephone mode of the wireless terminal according to an exemplary embodiment of the present invention.

Referring to FIG. 2, if a presentation is selected while in the video telephone mode of the wireless terminal in step 201, the controller 110 detects the selection of the presentation in step 202 and displays the type of presentation files stored in the memory 130 in step 203.

If a schedule presentation file is selected from the presentation files, the controller 110 detects the selection of the schedule presentation file in step 204 and stores screen data in a corresponding sequence, for example, first screen data from among all screen data which constitute the selected schedule presentation file, in a temporary buffer in step 205.

If the first screen data of the presentation file are stored in the temporary buffer, the controller 110 temporarily blocks the display and transmission of video data of a user of the wireless terminal, which are displayed in the video telephone mode.

In step 206, the controller 110 displays the first screen data of the presentation file, which are stored in the temporary buffer, on the display unit 160. Simultaneously, the controller stores the first screen data of the presentation file in a transmission buffer (RGB buffer) and transmits the first screen data of the presentation file to a communication partner terminal.

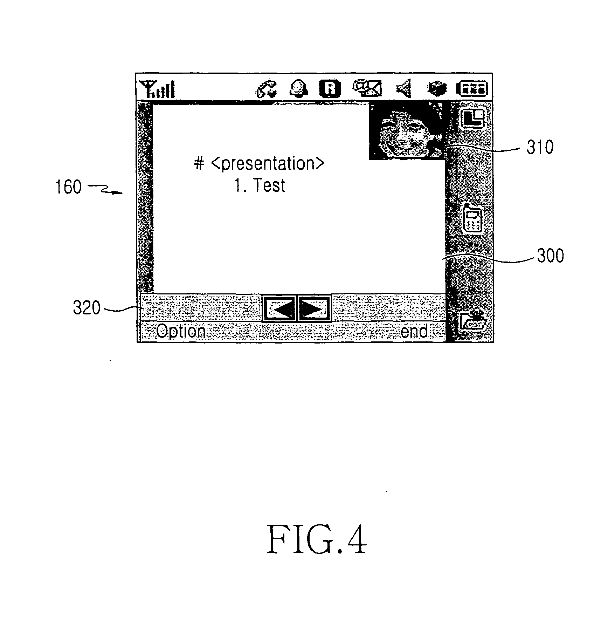

FIG. 4 illustrates the first screen data of the presentation displayed on the display unit 160 of the wireless terminal in step 206.

In a state in which the display unit 160 of the wireless terminal has a first area 300 for displaying video data of a user of a communication partner terminal, and a second area 310 for displaying video data of a user of the wireless terminal, if the presentation is selected, a third area 320 for displaying soft keys for controlling the presentation is displayed on the display unit 160 as illustrated in FIG. 4.

Further, screen data of a presentation file may be displayed on the first area 300 instead of the video data of the user of the communication partner terminal, and the video data of the user of the wireless terminal may be displayed on the second area 310 according to the selection of the user of the wireless terminal, as illustrated in FIG. 4.

In a state in which the first screen data of the presentation file are displayed as illustrated in FIG. 4, if a key corresponding to a soft key for selecting subsequent screen data among the soft keys displayed on the third area 320 is input, the controller 110 detects the input of the key in step 207, and displays and transmits the screen data of the presentation file while repeating steps 205 and 206.

If another presentation file is selected while steps 205 and 206 are repeated, the controller 110 detects the selection of said another presentation file in step 208 and repeats steps 203 to 207.

As described above, screen data in corresponding sequence from among the screen data of the presentation file may be displayed and transmitted according to the selection of the user of the wireless terminal.

Further, the screen data of the presentation file may be automatically selected at regular time intervals through an automatic setting, and may be displayed and transmitted. An operation for automatically selecting the screen data of the presentation file at regular time intervals through the automatic setting, and displaying and transmitting the selected screen data is performed through repetition of steps 205 and 206 after predetermined time periods.

The presentation file is displayed and transmitted in the video telephone mode as described above, so that the user of the communication partner terminal and the user of the wireless terminal can exchange voice data and communicate with each other while simultaneously watching the same presentation file.

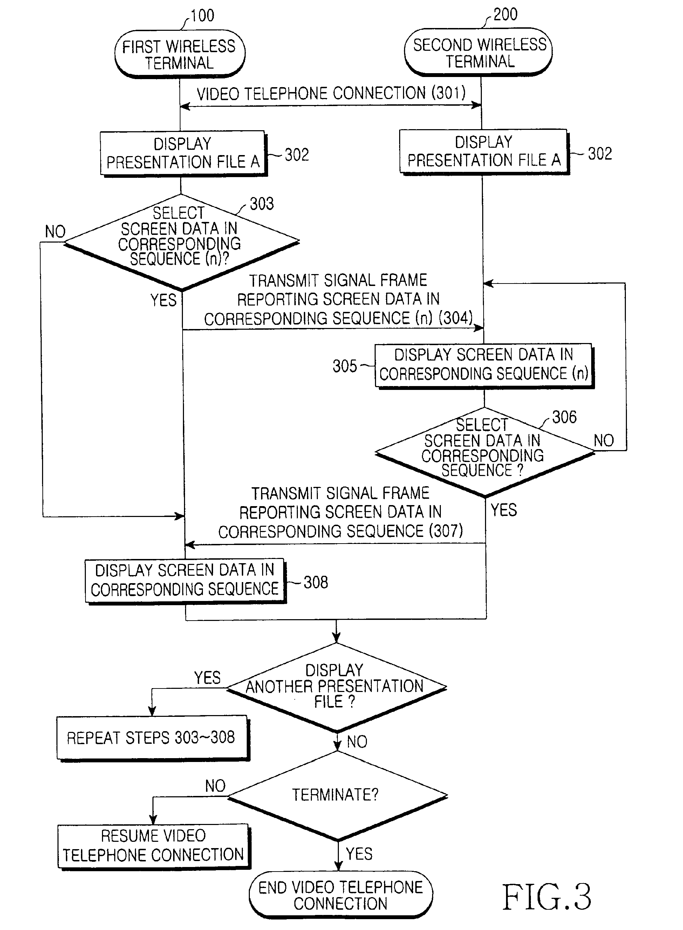

FIG. 3 is a flow diagram illustrating a process for performing a presentation in a video telephone mode of a wireless terminal according to another exemplary embodiment of the present invention. In this exemplary embodiment of the present invention, a first wireless terminal 100 and a second wireless terminal 200, which execute in a video telephone mode, have the same presentation file therein.

Hereinafter, the exemplary embodiment of the present invention will be described in detail with reference to FIGs. 3 and 4.

Referring to FIG. 4, in step 301 in which the first wireless terminal 100 and the second wireless terminal 200 are in the video telephone mode, the first wireless terminal 100 and the second wireless terminal 200 switch into a presentation mode for transmission/reception of voice data.

In the presentation mode, the first wireless terminal 100 and the second wireless terminal 200 select the same presentation file A from among presentation files stored in each memory therein, and display the same presentation file A on each display unit in step 302.

Herein, if either the first wireless terminal 100 or the second wireless terminal 200 does not have the presentation file A stored therein, the first wireless terminal 100 or the second wireless terminal 200 with the presentation file A may transmit the presentation file A to the second wireless terminal 200 or the first wireless terminal 100, respectively.

If the first wireless terminal 100 and the second wireless terminal 200 switch from the video telephone mode to the presentation mode, mutual transmission/reception of video data is temporarily blocked.

In a state in which the first wireless terminal 100 and the second wireless terminal 200 display the same presentation file A in the presentation mode, if a user of the first wireless terminal 100 selects screen data in corresponding sequence from among the screen data of the presentation file A, the controller of the first wireless terminal 100 detects the selection of the screen data in the corresponding sequence in step 303, and displays the selected screen data in the corresponding sequence and simultaneously transmits signal frames reporting the screen data in the corresponding sequence to the second wireless terminal 200 in step 304.

If the signal frames reporting the screen data in the corresponding sequence are received from the first wireless terminal 100, the controller of the second wireless terminal 200 detects the reception of the screen data in the corresponding sequence and displays the screen data in the corresponding sequence, which are reported by the signal frames, from the presentation file A in step 305.

For example, when it is assumed that the presentation file A is comprised of 10 screens of data, if the user of the first wireless terminal 100 selects the third screen from among the 10 screens of data, the controller of the first wireless terminal 100 displays the third screen data on the display unit of the first wireless terminal 100 and simultaneously transmits a signal frame reporting the third screen data to the second wireless terminal 200.

If the signal frame reporting the third screen data is received from the first wireless terminal 100, the second wireless terminal 200 detects that the third screen data have been displayed on the display unit of the first wireless terminal 100 through the received signal frame, and controls the third screen data from among the screen data of the presentation file A to be displayed on the display unit of the second wireless terminal 200.

In the meantime, if the user of the second wireless terminal 200 selects screen data in corresponding sequence from among the screen data of the presentation file A, the controller of the second wireless terminal 200 detects the selection of the screen data in the corresponding sequence in step 306, and displays the selected screen data in the corresponding sequence and simultaneously transmits signal frames reporting the screen data in the corresponding sequence to the first wireless terminal 100 in step 307.

If the signal frames reporting the screen data in the corresponding sequence are received from the second wireless terminal 200, the controller of the first wireless terminal 100 detects the reception of the screen data in the corresponding sequence and displays the screen data in the corresponding sequence, which are reported by the signal frames in the presentation file A, in step 308.

For example, when it is assumed that the presentation file A is comprised of 10 screens of data, if the user of the second wireless terminal 200 selects the fifth screen from among the 10 screens of data, the controller of the second wireless terminal 200 displays the fifth screen data on the display unit of the second wireless terminal 200 and simultaneously transmits a signal frame reporting the fifth screen data to the first wireless terminal 100.

If the signal frame reporting the fifth screen data is received from the second wireless terminal 200, the first wireless terminal 100 detects that the fifth screen data have been displayed on the display unit of the second wireless terminal 200 through the received signal frame, and controls the fifth screen data from among the screen data of the presentation file A to be displayed on the display unit of the first wireless terminal 100.

The signal frames reporting corresponding sequence of screen data constituting the presentation file may have values stored in the first wireless terminal 100 and the second wireless terminal 200 in advance.

Through repetition of steps 303 to 308, the first wireless terminal 100 and the second wireless terminal 200 can communicate with each other by exchanging voice data while displaying the same screen data of the presentation file A.

As described above, screen data in corresponding sequence from among the screen data of the presentation file A may be simultaneously displayed according to selection by the users of the first and the second wireless terminals.

Further, the screen data of the presentation file A may be automatically selected at regular time intervals through an automatic setting selected by one of the first and the second wireless terminals, and may be simultaneously displayed.

If the first wireless terminal 100 sets (n) screen data of the presentation file A to be sequentially selected, the controller of the first wireless terminal 100 controls the (n) screen data of the presentation file A to be sequentially displayed on the display unit of the first wireless terminal 100. Simultaneously, the controller of the first wireless terminal 100 controls signal frames reporting screen data in corresponding sequence from among the (n) screen data of the presentation file A to be sequentially transmitted to the second wireless terminal 200.

If the signal frames reporting the screen data in corresponding sequence are sequentially received from the first wireless terminal 100, the controller of the second wireless terminal 200 controls the screen data in corresponding sequence, which are reported by the signal frames, from among the (n) screen data of the presentation file A to be sequentially displayed on the display unit of the second wireless terminal 200.

If the second wireless terminal 200 sets the (n) screen data of the presentation file A to be sequentially selected, the controller of the second wireless terminal 200 controls the (n) screen data of the presentation file A to be sequentially displayed on the display unit of the second wireless terminal 200. Simultaneously, the controller of the second wireless terminal 200 controls signal frames reporting screen data in corresponding sequence from among the (n) screen data of the presentation file A to be sequentially transmitted to the first wireless terminal 100.

If the signal frames reporting the screen data in corresponding sequence are sequentially received from the second wireless terminal 200, the controller of the first wireless terminal 100 controls the screen data in corresponding sequence, which are reported by the signal frames, from among the (n) screen data of the presentation file A to be sequentially displayed on the display unit of the first wireless terminal 100.

As described above, the wireless terminals having the same presentation file in the video telephone mode display the same screen data of the presentation file, so that both the user of the wireless terminal and the user of the communication partner terminal can communicate with each other by exchanging voice data while simultaneously watching the same presentation file.

The present invention as described above provides a method for performing a presentation in a video telephone mode of a wireless terminal, so that users can communicate with each other while displaying the same presentation file in the video telephone mode.

Although exemplary embodiments of the present invention have been described for illustrative purposes, those skilled in the art will appreciate that various modifications, additions and substitutions are possible, without departing from the scope and spirit of the invention as disclosed in the accompanying claims, including the full scope of equivalents thereof.

## Claims

1. A method for performing a presentation in a video telephone mode of a wireless terminal, the method comprising the steps of:
selecting a presentation file in the video telephone mode; and
displaying and transmitting screen data in corresponding sequence of the selected presentation file.

2. The method as claimed in claim 1, wherein the screen data in corresponding sequence of the presentation file are selected by a user or are automatically selected.

3. The method as claimed in claim 1, wherein the step of displaying and transmitting the screen data in corresponding sequence comprises the sub-steps of:
storing the screen data in corresponding sequence of the presentation file in a temporary buffer; and
decoding and displaying the screen data in corresponding sequence stored in the temporary buffer, and transmitting the screen data in corresponding sequence stored in the temporary buffer to a communication partner terminal through a transmission buffer.

4. The method as claimed in claim 3, wherein transmitted/received video data in the video telephone mode are temporarily blocked when the screen data in corresponding sequence stored in the temporary buffer are displayed and transmitted.

5. A method for performing a presentation in a video telephone mode of a wireless terminal, the method comprising the steps of:
when a presentation is selected in the video telephone mode, switching into a presentation mode;
displaying types of presentation files in the presentation mode; and
when a schedule presentation file is selected from the presentation files, sequentially displaying and transmitting (n) screen data of the selected presentation file.

6. The method as claimed in claim 5, further comprising a step of, when the schedule presentation file is selected from the types of the presentation files, displaying and transmitting the (n) screen data of the selected presentation file according to selection of a user of the wireless terminal.

7. The method as claimed in claim 5, wherein the step of sequentially displaying and transmitting the (n) screen data comprises the sub-steps of:
storing screen data in corresponding sequence from among the (n) screen data of the presentation file in a temporary buffer;
decoding and displaying the screen data in corresponding sequence stored in the temporary buffer, and transmitting the screen data in corresponding sequence stored in the temporary buffer to a communication partner terminal through a transmission buffer; and
sequentially displaying and transmitting the (n) screen data through repetition of these steps.

8. The method as claimed in claim 5, wherein transmitted/received video data during video telephone are temporarily blocked when the (n) screen data are displayed and transmitted.

9. A method for performing a presentation in a video telephone mode of a wireless terminal, the method comprising the steps of:
when a first wireless terminal and a second wireless terminal are in video telephone mode, selecting and displaying an equal presentation file by the first wireless terminal and the second wireless terminal;
when the first wireless terminal selects screen data in corresponding sequence of the presentation file, displaying by the first wireless terminal the screen data in corresponding sequence and transmitting signal frames reporting the screen data in corresponding sequence to the second wireless terminal; and
when the signal frames are received from the first wireless terminal, displaying by the second wireless terminal screen data in corresponding sequence of the presentation file, which are equal to the screen data selected by the first wireless terminal.

10. The method as claimed in claim 9, further comprising the steps of:
when the second wireless terminal selects screen data in corresponding sequence of the presentation file, displaying by the second wireless terminal the screen data in corresponding sequence and transmitting signal frames reporting the screen data in corresponding sequence to the first wireless terminal; and
when the signal frames are received from the second wireless terminal, displaying by the first wireless terminal screen data in corresponding sequence of the presentation file, which are equal to the screen data selected by the second wireless terminal.

11. The method as claimed in claim 9, wherein transmitted/received video data during video telephone mode are temporarily blocked when the first and the second wireless terminals select and display the same presentation file.

12. A method for performing a presentation in a video telephone mode of a wireless terminal, the method comprising the steps of:
when a first wireless terminal and a second wireless terminal are in the video telephone mode, selecting and displaying an equal presentation file by the first wireless terminal and the second wireless terminal;
whenever the first wireless terminal sequentially selects (n) screen data of the presentation file, sequentially displaying by the first wireless terminal the (n) screen data in corresponding sequence and sequentially transmitting signal frames, which report screen data in corresponding sequence from among the (n) screen data, to the second wireless terminal; and
when the signal frames are received from the first wireless terminal, displaying by the second wireless terminal (n) screen data of the presentation file in a sequence equal to a sequence in which the (n) screen data of the presentation file in the first wireless terminal are displayed.

13. The method as claimed in claim 12, further comprising the steps of:
whenever the second wireless terminal sequentially selects the (n) screen data of the presentation file, sequentially displaying by the second wireless terminal the (n) screen data in corresponding sequence and sequentially transmitting signal frames, which report screen data in corresponding sequence from among the (n) screen data, to the first wireless terminal; and
when the signal frames are received from the second wireless terminal, displaying by the first wireless terminal (n) screen data of the presentation file in a sequence equal to a sequence in which the (n) screen data of the presentation file in the second wireless terminal are displayed.

14. The method as claimed in claim 12, wherein transmitted/received video data during video telephone mode are temporarily blocked when the first and the second wireless terminals select and display the equal presentation file.

15. The method as claimed in claim 12, wherein sequential selection of the (n) screen data of the presentation file is automatically performed.

16. A wireless terminal device, comprising:
a controller;
a display; and
a transmitter, wherein the controller controls to display and transmit screen data in corresponding sequence of the selected presentation file if a presentation file is selected when the wireless terminal is in video telephone mode.

17. The wireless terminal of claim 16, further comprising:
a memory, wherein the presentation file is stored in the memory.

18. The wireless terminal of claim 17, wherein a plurality of presentation files are stored in the memory.

19. The wireless terminal of claim 16, further comprising:
a temporary buffer; and
a transmission buffer, wherein
the screen data is stored in the temporary buffer and the transmission of the screen data is through the transmission buffer.
